# EUROPEAN PATENT SPECIFICATION

(11) **EP 2 505 857 B1**
(45) Date of publication and mention of the grant of the patent: **11.05.2016**
(21) Application number: 12161431.7
(22) Date of filing: 27.03.2012
(51) Int. Cl.: F16B 37/14, F01N 13/10

(54) **Fastener cover**
Befestigungsabdeckung
Couvercle d'élément de fixation

(30) Priority: 30.03.2011 GB 201105311
(43) Date of publication of application: 03.10.2012
(73) Proprietor: Nissan Motor Manufacturing (UK) Ltd., Cranfield Bedfordshire MK43 0DB (GB)
(72) Inventor: Lopez Ortiz, José, Barcelona 08040 (ES); Lopez Ortiz, Andres, Barcelona 08040 (ES)

(56) References cited:
- EP-A1- 0 346 237
- EP-A1- 1 600 613
- EP-A1- 1 849 656
- JP-A- 9 011 847
- US-A1- 2006 070 598

## Description

### Field of the invention.

The present invention relates to a fastener cover, and particularly to a fastener cover covering the head of a fastener used to secure a heat shield to a vehicle component. Aspects of the invention relate to a fastener cover, to a heat shield, to a vehicle component, to a vehicle exhaust system, to a vehicle, and to a method.

### Background of the invention.

Heat shields are employed in a plurality of locations on modern motor vehicles, and are primarily intended to protect the vehicle user from high temperature vehicle components. Heat shields may also be used to manage the emission or radiation of heat from high temperature vehicle components, where such radiated heat may otherwise adversely affect the performance of other vehicle components or systems in proximity thereto.

A disadvantage of known heat shield designs is the excessive time required to assemble the heat shield to a vehicle component such as an engine or exhaust part. The heat shield is typically bolted, riveted or clipped to the component only after the component has been fitted into place or sub-assembled. The shape of the heat shield, which is dictated by its function and performance, often results in the obscuration of the component *in situ,* necessitating the removal of the heat shield during routine maintenance of the component.

The locations of fasteners for securing the heat shield to the vehicle component must be decided with care. Whilst the heat shield is typically arranged to manage heat radiation from the majority of the exterior surface of the component, the exposed heads of the fasteners used to secure the heat shield to the component often provide a conduction path for heat therefrom. This causes localised concentrations of heat around the heat shield, requiring the fasteners to be positioned away from the greatest concentrations of heat produced by the component. This can, however, adversely affect accessibility to the fasteners, hindering removal of the heat shield and thus, serviceability of the component.

US2006/0070598A1 discloses a heat shield fastener cover with the features of the preamble of claim 1, namely a heat shield 10 for an engine knock sensor or oxygen sensor 24. Heat shield shroud 12 is held in contact with the sensor fastener in use by a clip 20.
It is against this background that the present invention has been conceived. It is an aim of the present invention to address the issue of localised concentrations of heat radiating from fasteners securing a heat shield to a vehicle component, whilst keeping assembly time to a minimum. Embodiments of the invention may provide a fastener cover in which exposed fasteners are covered, in order to avoid localised concentrations of heat. In addition, the present invention offers a reduction in component size and weight when compared to known systems.
Other aims and advantages of the invention will become apparent from the following description, claims and drawings.

### Summary of the invention

Aspects of the invention provide a heat shield fastener cover, a heat shield arrangement, a vehicle component, a vehicle exhaust system, a vehicle and a method, as claimed in the appended claims.
According to an aspect of the present invention for which protection is sought, there is provided a heat shield fastener cover for managing the radiation of heat from a vehicle component, said fastener cover comprising a base portion, a hinge portion, a cap portion, and a latch arrangement, said hinge portion being arranged to permit the cap to move between an open and a closed position relative to the base portion, the cap portion being spaced apart from the base portion when closed to limit heat transfer from the base portion to said cap portion; characterized in that: the base portion and the cap portion comprise cooperating latching means arranged to releasably latch the cap portion in the closed position.

In an example, the fastener cover further comprises an arm portion joining the hinge portion to the cap portion.

In an example, the fastener cover further comprises an arm portion joining the hinge portion to the base portion.

The heat shield fastener cover may be arranged to fit over the head of a fastener.

Advantageously, the arm portion of the present invention is arranged to resist or insulate the transfer of heat from a head of said fastener into the cap. This arrangement manages localised concentrations of heat that may otherwise be caused around exposed fasteners and may be employed to secure a heat shield to a heat producing vehicle component, such as an internal combustion engine or a component therefor.

Advantageously, the latching means is arranged to keep the cap portion secured in the closed position, minimising the risk of damage in use and maintaining an aesthetically pleasing uniform appearance where a plurality of fastener covers are employed in close proximity to one another.

In an example, the cap portion is arranged to rest in such a way as to provide a substantially even gap between the perimeters of said cap portion and said base portion when the cap portion is in the closed position.

In an example, when the fastener cover is in the closed position, the cap portion is disposed so as not to touch any portion of the fastener.

In an example, when the fastener cover is in the closed position, a gap or spacing is provided between the cap portion and the fastener, so as to reduce thermal transference therebetween.

In an example, at least one of the arm portion and the latching portion is arranged to provide a gap between the perimeter of the cap portion and said base portion when the cap portion is in the closed position.

Advantageously, the provision of an air gap between the cap portion and the head of the fastener further improves the performance of the heat shield and greatly reduces the transmission of heat between the head of the fastener and the external surface of the cap portion.

In an example, the cap portion is substantially cup-shaped.

Advantageously, the use of a cup-shaped cap may mitigate the transmission of heat from any exposed surface of the fastener enclosed thereby.

In an example, the cap portion of the fastener cover is hingedly attached to the base portion via a cranked arm. The cranked arm may comprise one or more slots, apertures or regions of reduced cross-section or thickness formed therein so as to reduce thermal transference between the base portion and the cap portion.

In an example, the base portion, the hinge portion, and the cap portion are integrally formed. For example, they may be formed from a metal stamping.

Advantageously, integral forming of the fastener cover of the present invention minimises parts complexity and manufacturing costs whilst enhancing reliability in use by avoiding the use of dissimilar materials, and of joining methods which may be adversely affected by repeated heat cycling in use.

In an example, the fastener cover comprises a securing means arranged to cooperate with at least a portion of a fastener having a head, and the cap portion is arranged to substantially enclose at least a portion of said head when the cap portion is in the closed position.

Advantageously, the fastener cover of the present invention may be preassembled onto a fastener intended to secure a larger part such as a heat shield to a vehicle component, before said fastener is fitted to the vehicle. In use, the assembly operator secures the heat shield to the component using the aforementioned fastener and once the fastener is secure, positions the cap portion, secured to the fastener via the base portion, hinge portion and arm portion, to substantially cover the otherwise exposed head of the fastener. In this way, the fastener cover of the present invention may be employed to greatly improve the thermal uniformity of the exterior surface of the heat shield in use. Advantageously, as the fastener is torqued down onto the base portion of the cover during assembly, the fastener cover is retained or clamped in position by the fastener in use, whether the fastener cover cap is in the open or the closed position.

In an example, the fastener cover is arranged to substantially enclose at least a portion of said fastener head without permitting direct contact between said head and the cap portion when said cap portion is in the closed position.

Advantageously, the fastener cover of the present invention is arranged to maintain a pre-determined air-gap between the cap portion and the head of said fastener in use, attenuating the radiation of heat from said fastener beyond the outer surface of the cap portion.

According to another aspect of the present invention, there is provided a heat shield arrangement for a vehicle, comprising a heat shield, at least one fastener for securing the heat shield to the vehicle, and at least one fastener cover as described in any preceding paragraph.

According to another aspect of the present invention, there is provided a vehicle component with a heat shield arrangement as described in the preceding paragraph, wherein said fastener cover limits radiation of heat from the vehicle component through the fastener.

According to another aspect of the present invention, there is provided a vehicle exhaust system comprising a heat shield arrangement, a vehicle component, or a fastener cover as described in any preceding paragraph.

According to another aspect of the present invention, there is provided a vehicle comprising an exhaust system, further comprising a heat shield arrangement, a vehicle component, or a fastener cover as described in any preceding paragraph.

According to another aspect of the present invention, there is provided a method of securing a heat shield and a heat shield fastener cover to a vehicle component; the method comprising inserting a fastener through a corresponding through-hole in a base portion of said heat shield fastener cover and then through said heat shield; inserting said fastener into a corresponding hole in said component; securing said fastener to said component; positioning a cap, hingedly mounted to said base portion of said heat shield fastener cover, to cover an exposed portion of said fastener; and securing said cap in place by engagement of cooperating latching means integrated into said cap and said base portion.
The base portion may comprise a securing means for the heat shield fastener cover.
Embodiments of the present invention may improve the performance of an existing heat shield; and may be employed to manage localised concentrations of heat radiating from fasteners in contact with a heat radiating vehicle component, without significantly adding to assembly time or cost.

### Brief Description of the Drawings

The present invention will now be described, by way of example only, with reference to the accompanying drawings in which:
Figure 1 shows a perspective view of a component from a known vehicle exhaust system;
Figure 2a shows a perspective view of an example of a heat shield fastener cover embodying the present invention;
Figure 2b shows a side view of an example of a heat shield fastener cover embodying the present invention;
Figure 2c shows a front view of an example of a heat shield fastener cover embodying the present invention;
Figure 3 shows a perspective view of the vehicle component of Figure 1 with the heat shield fastener cover of Figure 2 *in situ;*
Figure 4 illustrates operation of the fastener cover of Figure 2; and
Figure 5 illustrates a cross section through the fastener cover of Figure 2 enclosing a portion of a threaded fastener.

While the examples given for suitable applications for the present invention relate to heat shields for passenger vehicles, it will be appreciated by one skilled in the art that there are other potential uses for the present invention with non-vehicular applications, such as generator sets, or with vehicles not intended for carrying passengers, such as trucks or other such commercial vehicles.

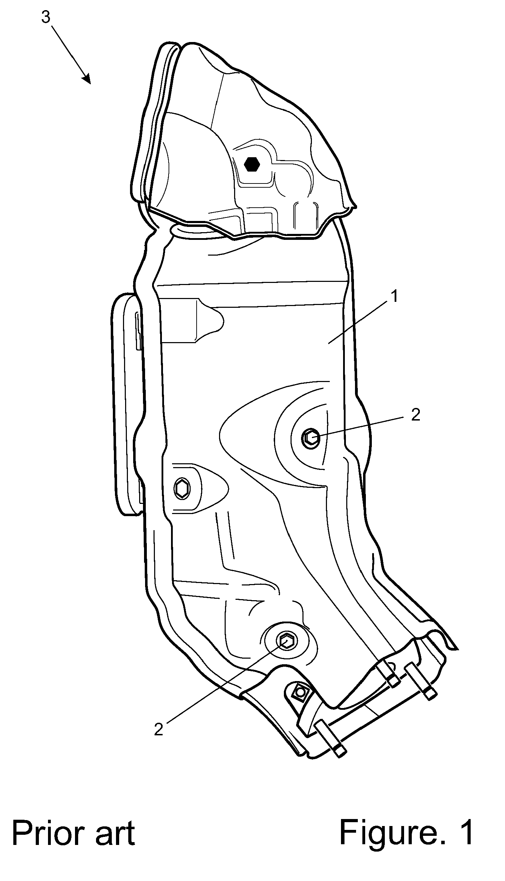

Figure 1 shows an example of a known heat shield arrangement employed to cover a component of an exhaust system for a vehicle. Heat shields are commonly used in a number of locations in and around modern motor vehicles. Typical locations for heat shields are around internal combustion engines, exhaust system components such as manifolds, catalytic converters, down-pipes and silencers, around turbo chargers, super chargers and other pumps and compressors; and may also be used around electrical systems such as motors and inverters.

In Figure 1, the vehicle component is a catalytic converter 3, which is typically positioned close to the cylinder head and exhaust manifold of an internal combustion engine (not shown).

The catalytic converter 3 is enclosed at least in part by a heat shield 1 shaped to conform to the outer surface of the catalytic converter 3. The heat shield 1 is secured to the catalytic converter 3 by a plurality of fasteners 2 which may take the form of clips, threaded bolts or studs.

During assembly of the vehicle, the heat shield 1 is secured to the catalytic converter 3 by an assembly operator after the catalytic converter 3 has been fitted to the engine (not shown). Once the engine has been assembled with the catalytic converter 3 and heat shield 1 secured thereto, the entire assembly may be fitted into the vehicle (not shown). Whilst this is convenient during vehicle assembly, there may be occasions during the life of the vehicle where the heat shield 1 may need to be removed in order to provide access to other components mounted nearby. In order to facilitate removal of the heat shield 1 in situ within the vehicle, careful positioning of the fasteners 2 is necessary. Preferably, each fastener 2 is accessible to maintenance personnel without necessitating removal of other vehicle components, which would increase maintenance time and cost.

Whilst the heat shield 1 is designed to manage the amount of heat transferred from the catalytic converter 3 to surrounding parts within the vehicle, any exposed fastener 2 may provide an unwanted heat path, conducting heat from the catalytic converter 3 to the surrounding area. This heat conduction by the fasteners securing the heat shield 1 to the component compromises the overall performance of the heat shield 1, and requires care to be taken to avoid location of heat sensitive vehicle components adjacent to such fasteners 2. In some cases, the heat shield 1 can be provided with small extension pieces arranged to overhang and partially cover such fasteners, but such extension pieces greatly hamper accessibility to the fasteners for maintenance.

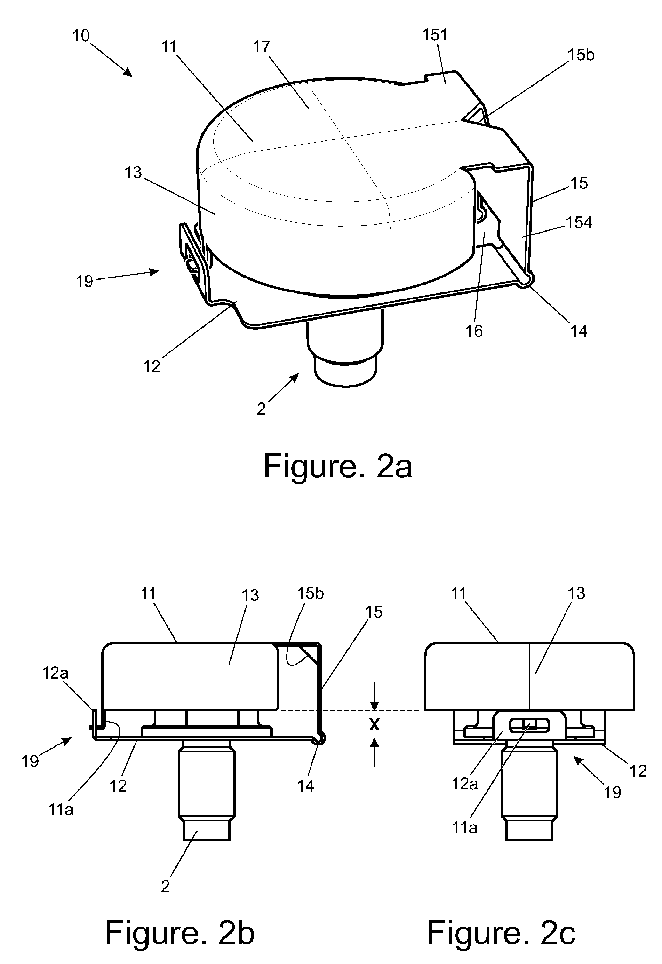

Figure 2 illustrates various views of an example of a fastener cover 10 embodying an aspect of the present invention. In particular, Figure 2a is a perspective view from above; Figure 2b is a side elevation; and Figure 2c is a front elevation of the fastener cover. For clarity, the reference numerals used in Figure 1 have the same meanings in Figure 2.

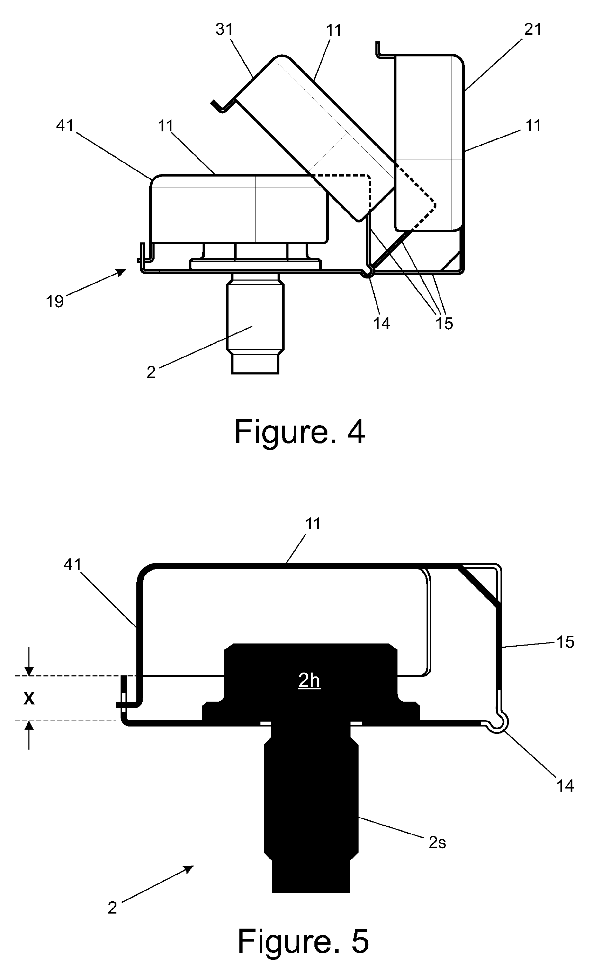

Fastener cover 10 comprises a hinged cover or cap device arranged to attach to, and cover, a portion of a fastener 2 for fastening a heat shield to a vehicle component, such as the catalytic converter 3 shown in Figure 1. Cover 10 further comprises securing means in the form of a base or base portion 12 and cover means in the form of a cap or cap portion 11. One side or end of the cap 11 is hinged to the base 12 by means of a hinge portion 14 whilst the other side or end of the cap 11 distal from the hinge portion 14 is releasably secured to the base 12 by a latch arrangement 19. The hinge portion 14 joins the cap 11 to the base 12 via an arm 15, which is a cranked arm. The hinge portion 14 is arranged to permit the cap 11 to move between an open and a closed position relative to the base 12, as shown in detail in Figure 4 and as described below.

The arm 15 is arranged to limit heat transfer from the base 12 to the cap 11. In the example shown, heat transfer by the arm 15 is limited by a localised reduction in the cross section of the material from which the arm 15 is formed. This localised reduction in cross section is achieved by means of a substantially medially-disposed slot 16 formed in the base 12 and extending through the hinge portion 14 and into the arm 15. The slot 16 reduces heat transfer from the base 12 both by locally reducing material mass and by encouraging airflow around and through the arm 15 and hinge portion 14, thereby improving heat management performance of the fastener cover 10 in use.

Cap 11 is substantially cup-shaped, having a cylindrical wall 13, arranged to fit over the head of the fastener 2; and sized so as not to make direct contact with any part of the fastener 2 in use. The substantially cylindrical wall 13 is closed at one end by cover surface 17, from which arm 15 extends. Arm 15 is generally L-shaped, comprising a first arm portion 151 extending from the cover surface 17; and a second arm portion 154 extending from the hinge portion 14. The first and second arm portions 151 and 154 are arranged to be substantially perpendicular to each other. An arm portion 156 is also provided to join the hinge portion 14 to the base portion 12.

Stiffening means, in the form of a so-called bird-beak stiffener 15b, is provided at the joint between the arm portions 151 and 154, disposed above the slot 16.

The stiffener 15b serves to replace some of the lost stiffness in the second arm portion 154 caused by the slot 16; and is arranged to ensure that the cover surface 17 and substantially cylindrical wall 13 retain their shape and do not deform or warp in use. It will be appreciated that the stiffener 15b may not be required, depending on the material used to form the fastener cover 10 and its overall size.

The relative dimensions of the first arm portion 151 and the second arm portion 154 of the arm 15 may be selected as desired. Increasing their lengths will tend to reduce their ability to transfer heat, whilst reducing their lengths will reduce overall packaging volume; which may be advantageous where available space is at a premium.

The Figures show the latching means 19 engaged, and located distal from the arm 15 and hinge portion 14. The latching means 19 comprises a latch, in the form of a tongue 11 a comprising an extension of the wall 13 of the cap 11, and a catch or receiver 12a provided by a loop extending from the edge of the base 12. The latching means 19 is arranged to hold the cap 11 in a closed position when the tongue 11 a is in mutual engagement with the receiver 12a.

In order to further improve the capability of the fastener cover 10 to resist the transfer of heat from the fastener 2 to the surrounding area, the latching means 19 and the arm 15 are arranged to prevent the perimeter 13 of the cap 11 coming into contact with either the base 12 or the fastener 2 when the cap is in the closed position as shown. Instead, when the cap 11 is in the closed position, an air gap X (Figs. 2b, 2c) of substantially uniform depth is provided all around the head of the fastener 2. This air gap X allows air to circulate around the interior and exterior surfaces of the fastener cover, improving performance in use.

The base 12 is provided with a through-hole (not shown) through which the fastener 2 is inserted. The fastener may be used to secure a heat shield 1 to a vehicle component, such as a catalytic converter 3; or may additionally be used to secure the component itself to the vehicle. The through-hole may be plain or may have features integrally formed therein, such as a star-washer, to resist any vibration-induced loosening of the fastener 2 in use. Additionally or alternatively, the through-hole may be provided with an anti-rotation feature arranged to ensure that the fastener cover 10 is correctly oriented relative to the component to which it is to be mounted in use.

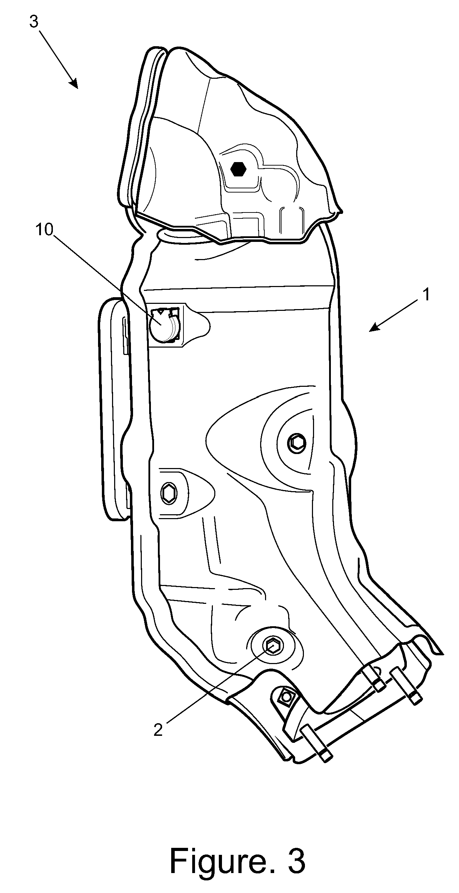

Figure 3 shows an example of the heat shield 1 of Figure 1 whose performance has been enhanced by the addition of a fastener cover 10 of the present invention arranged to cover one of the fasteners 2. As with the example shown in Figure 1, the heat shield 1 is arranged to cover a substantial proportion of a catalytic converter 3. In the example shown in Figure 1, the exposed heads of the fasteners 2 provide a localised heat path, permitting heat to radiate from the catalytic converter 3 to the area surrounding each fastener 2. In the example shown in Figure 3, the uppermost fastener has been covered during assembly by a fastener cover 10 of the present invention while the lowermost fastener 2 has been left exposed for illustrative purposes. It will be understood that one, more than one, or all such fasteners 2 may be covered by respective fastener covers 10, depending on requirements. Covering all fasteners may improve thermal performance at the expense of assembly time, parts complexity and cost.

Figure 4 illustrates installation of the fastener cover 10 of the present invention. Initially, cap 11 is in an open position 21 which is substantially perpendicular to base 12; and the user is afforded good access to a head (2h, Fig. 5) of the fastener.

After fastener 2 is torqued up, the user rotates cap 11 about hinge portion 14 towards fastener 2, through an intermediate position 31 to a closed position 41. Latching means 19 cooperates to hold cap 11 in the closed position 41 until the user manually releases the latching means 19 by hand or with an appropriate tool.

In an example, not shown, the arm 15 between the cap 11 and the base 12 is provided with a hinge portion at either end, that is to say, adjacent to the base and adjacent to the cap. In this example, the cap 11 may be rotated about two axes, allowing greater freedom of movement; and thus may be used in locations where access by hand may be restricted. A further advantage of this arrangement is that only a small clearance gap between the fastener cover of the present invention and the adjacent heat shield and/or component to which the heat shield is to be secured in use is required. This gap is necessary to provide clearance to allow the cap to move between an open and a closed position.

Figure 5 shows a cross section through a fastener cover 10 of the present invention and a threaded fastener 2 to which the fastener cover is secured. The fastener 2 is shown comprising a head 2h and a shaft 2s, which is typically threaded. In use, the shaft 2s is inserted into a correspondingly threaded hole in a heat producing vehicle component such as the catalytic converter 3 shown in Figure 3. In Figure 5, the cap 11 is in the closed position 41, and encloses at least a portion of the head 2h of the fastener 2.

It may be seen from the Figure that, due to the relative dimensions of the arm 15, the latching means 19 and the cap 11, a substantially even air gap X is provided all around the head 2h of the fastener 2 (see also Figure 2), and that no part of the cap 11 is in contact with the head 2h of the fastener 2. This permits the management of heat transferred in use from the fastener 2 to the cap 11 of the fastener cover 10.

It will be understood from the foregoing that the fastener cover of the present invention greatly improves the overall performance of heat shields by covering otherwise exposed fasteners used to secure each heat shield to a vehicle component. The fastener cover of the present invention acts as a secondary heat shield to avoid localised concentrations of heat or hot spots which may otherwise be formed by exposed fastener heads etc. Use of the fastener cover of the present invention greatly reduces the risk of heat damage to other vehicle components when they are in close proximity to the heat shield. This approach improves the safety of personnel and the reliability of vehicle components which are close to the heat shield, whilst reducing assembly time, mass and cost.

Other advantages will be apparent to one skilled in the art, and the present examples and embodiments are to be considered illustrative and not restrictive.

## Claims

1. A heat shield fastener cover (10) for managing the radiation of heat from a vehicle component (3), said fastener cover (10) comprising a base portion (12), a hinge portion (14), a cap portion (11), and a latch arrangement (19), said hinge portion (14) being arranged to permit the cap (11) to move between an open position (21) and a closed position (41) relative to the base portion (12), the cap (11) being spaced apart from the base portion (12) when closed to limit heat transfer from the base portion (12) to said cap portion (11);
**characterized in that**:
the base portion (12) and the cap portion (11) comprise cooperating latching means (12a, 11 a) arranged to releasably latch the cap portion (11) in the closed position (41).

2. A fastener cover (10) as claimed in claim 1, further comprising an arm portion (151, 154) joining the hinge portion (14) to the cap portion (11).

3. A fastener cover (10) as claimed in claim 1 or claim 2, further comprising an arm portion (156) joining the hinge portion (14) to the base portion (12).

4. A fastener cover (10) as claimed in any preceding claim, wherein in the closed position (41) a gap or spacing is provided between the cap portion (11) and the fastener (2), so as to reduce thermal transference therebetween.

5. A fastener cover (10) as claimed in any preceding claim, wherein the cap portion (11) is substantially cup-shaped.

6. A fastener cover (10) as claimed in any preceding claim, wherein the cap portion (11) is hingedly attached to the base portion (12) via a cranked arm (15) comprising one or more slots (16), apertures (15b), or regions of reduced cross-section or thickness formed therein so as to reduce thermal transference between the base portion (12) and the cap portion (11).

7. A fastener cover (10) as claimed in any preceding claim, wherein the base portion (12), the hinge portion (14) and the cap portion (11) are integrally formed.

8. A heat shield arrangement for a vehicle, comprising a heat shield (1), at least one fastener (2) for securing the heat shield (1) to the vehicle, and at least one fastener cover (10) as claimed in any preceding claim.

9. A heat shield arrangement for a vehicle as claimed in claim 8, wherein the fastener cover (10) is pre-assembled onto the fastener (2) prior to fitment of the fastener (2) to the vehicle.

10. A heat shield arrangement for a vehicle as claimed in claim 8 or claim 9, wherein the fastener cover (10) is clamped in position by the fastener (2) in use, both when the fastener cover cap (11) is in its open position (21), and when the fastener cover cap (11) is in its closed position (41).

11. A vehicle component (3) with a heat shield arrangement as claimed in any one of claims 8 to 10, wherein said fastener cover (10) limits radiation of heat from the component (3) through the fastener (2).

12. A vehicle exhaust system comprising a heat shield arrangement, a vehicle component (3), or a fastener cover (10), as claimed in any preceding claim.

13. A vehicle comprising an exhaust system, a heat shield arrangement, a component (3), or a fastener cover (10), as claimed in any preceding claim.

14. A method of securing a heat shield (1) and a heat shield fastener cover (10) to a vehicle component (3); the method comprising:
inserting a fastener (2) through a corresponding through-hole in a base portion (12) of said heat shield fastener cover (10) and then through said heat shield (1);
inserting said fastener (2) into a corresponding hole in said component (3);
securing said fastener (2) to said vehicle component (3);
positioning a cap (11), hingedly mounted to said base portion (12) of said heat shield fastener cover (10), to cover an exposed portion of said fastener (2); and:
securing said cap in place by engagement of cooperating latching means (12a, 11 a) integrated into said cap (11) and said base portion (12).

## Patentansprüche

1. Wärmeschutzschild-Befestigungsabdeckung (10) zum Regeln der Wärmestrahlung von einem Fahrzeugbauteil (3), wobei die Befestigungsabdeckung (10) einen Basisabschnitt (12), einen Scharnierabschnitt (14), einen Deckelabschnitt (11) und einen Verschlussabschnitt (19) aufweist, wobei der Scharnierabschnitt (14) angeordnet ist, es dem Deckel (11) zu ermöglichen, sich mit Bezug auf den Basisabschnitt (12) zwischen einer geöffneten Position (21) und einer geschlossenen Position (41) zu bewegen, wobei der Deckel (11) im geschlossenen Zustand von dem Basisabschnitt (12) beabstandet ist, um die Wärmeübertragung vom Basisabschnitt (12) zum Deckelabschnitt (11) einzuschränken;
**dadurch gekennzeichnet, dass**:
der Basisabschnitt (12) und der Deckelabschnitt (11) miteinander zusammenwirkende Verschlussmittel (12a, 11a) umfassen, die angeordnet sind, den Deckelabschnitt (11) in der geschlossenen Position (41) zu verriegeln.

2. Befestigungsabdeckung (10) nach Anspruch 1, ferner einen Armabschnitt (151, 154) umfassend, der den Scharnierabschnitt (14) mit dem Deckelabschnitt (11) verbindet.

3. Befestigungsabdeckung (10) nach Anspruch 1 oder 2, ferner einen Armabschnitt (156) umfassend, der den Scharnierabschnitt (14) mit dem Basisabschnitt (12) verbindet.

4. Befestigungsabdeckung (10) nach einem der vorhergehenden Ansprüche, wobei in der geschlossenen Position (41) ein Spalt oder ein Abstand zwischen dem Deckelabschnitt (11) und der Befestigung (2) bereitgestellt wird, um die Wärmeübertragung zwischen diesen zu verringern.

5. Befestigungsabdeckung (10) nach einem der vorhergehenden Ansprüche, wobei der Deckelabschnitt (11) im Wesentlichen napfförmig ausgebildet ist.

6. Befestigungsabdeckung (10) nach einem der vorhergehenden Ansprüche, wobei der Deckelabschnitt (11) über einen gekrümmten Arm (15), umfassend einen/eine oder mehrere Schlitze (16), Öffnungen (15b) oder Bereiche mit verringerter Querschnittsfläche oder Dicke, die darin ausgebildet sind, um die Wärmeübertragung zwischen dem Basisabschnitt (12) und dem Deckelabschnitt (11) zu verringern, klappbar an dem Basisabschnitt (12) befestigt ist.

7. Befestigungsabdeckung (10) nach einem der vorhergehenden Ansprüche, wobei der Basisabschnitt (12), der Scharnierabschnitt (14) und der Deckelabschnitt (11) einstückig ausgebildet sind.

8. Wärmeschutzschildanordnung für ein Fahrzeug, umfassend einen Wärmeschutzschild (1), wenigstens eine Befestigung (2) zum Sichern des Wärmeschutzschilds (1) an dem Fahrzeug und wenigstens eine Befestigungsabdeckung (10) nach einem der vorhergehenden Ansprüche.

9. Wärmeschutzschildanordnung für ein Fahrzeug nach Anspruch 8, wobei die Befestigungsabdeckung (10) vor dem Einbauen der Befestigung (2) an dem Fahrzeug an die Befestigung (2) vormontiert ist.

10. Wärmeschutzschildanordnung für ein Fahrzeug nach Anspruch 8 oder 9, wobei die Befestigungsabdeckung (10) mit der Befestigung (2) im Gebrauch, sowohl wenn sich der Befestigungsabdeckungsdeckel (11) in seiner geöffneten Position (21) befindet als auch wenn sich der Befestigungsabdeckungsdeckel (11) in seiner geschlossenen Position (41) befindet, festgeklemmt wird.

11. Fahrzeugbauteil (3) mit einer Wärmeschutzschildanordnung nach einem der Ansprüche 8 bis 10, wobei die Befestigungsabdeckung (10) die Wärmestrahlung von dem Bauteil (3) durch die Befestigung (2) einschränkt.

12. Fahrzeugauspuffsystem, umfassend eine Wärmeschutzschildanordnung, ein Fahrzeugbauteil (3) oder eine Befestigungsabdeckung (10) nach einem der vorhergehenden Ansprüche.

13. Fahrzeug, umfassend ein Auspuffsystem, eine Wärmeschutzschildanordnung, ein Bauteil (3) oder eine Befestigungsabdeckung (10) nach einem der vorhergehenden Ansprüche.

14. Verfahren zum Sichern eines Wärmeschutzschilds (1) und einer WärmeschutzschildBefestigungsabdeckung (10) an einem Fahrzeugbauteil (3); wobei das Verfahren Folgendes umfasst:
Einführen einer Befestigung (2) durch ein entsprechendes Durchgangsloch in einem Basisabschnitt (12) der Wärmeschutzschild-Befestigungsabdeckung (10) und dann durch den Wärmeschutzschild (1);
Einführen der Befestigung (2) in ein entsprechendes Loch in dem Bauteil (3);
Sichern der Befestigung (2) an dem Fahrzeugbauteil (3);
Positionieren eines Deckels (11), klappbar an dem Basisabschnitt (12) der Wärmeschutzschild-Befestigungsabdeckung (10) befestigt, um einen freiliegenden Abschnitt der Befestigung (2) abzudecken; und:
Sichern des Deckels an dieser Position durch Eingreifen zusammenwirkender Verschlussmittel (12a, 11a), die in den Deckel (11) und den Basisabschnitt (12) integriert sind.

## Revendications

1. Couvercle d'élément de fixation de protecteur thermique (10) destiné à gérer le rayonnement de chaleur à partir d'un composant de véhicule (3), ledit couvercle d'élément de fixation (10) comprenant une partie de base (12), une partie d'articulation (14), une partie de capuchon (11), et un agencement de verrou (19), ladite partie d'articulation (14) étant agencée pour permettre au capuchon (11) de se déplacer entre une position ouverte (21) et une position fermée (41) par rapport à la partie de base (12), le capuchon (11) étant espacé de la partie de base (12) lorsqu'il est fermé pour limiter un transfert de chaleur de la partie de base (12) à ladite partie de capuchon (11);
**caractérisé en ce que** :
la partie de base (12) et la partie de capuchon (11) comprennent des moyens de verrouillage coopérants (12a, 11 a) agencés pour verrouiller de façon libérable la partie de capuchon (11) dans la position fermée (41).

2. Couvercle d'élément de fixation (10) selon la revendication 1, comprenant en outre une partie de bras (151, 154) reliant la partie d'articulation (14) à la partie de capuchon (11).

3. Couvercle d'élément de fixation (10) selon la revendication 1 ou la revendication 2, comprenant en outre une partie de bras (156) reliant la partie d'articulation (14) à la partie de base (12).

4. Couvercle d'élément de fixation (10) selon l'une quelconque des revendications précédentes, dans lequel, dans la position fermée (41), un espace ou espacement est ménagé entre la partie de capuchon (11) et l'élément de fixation (2), de façon à réduire un transfert thermique entre ces derniers.

5. Couvercle d'élément de fixation (10) selon l'une quelconque des revendications précédentes, dans lequel la partie de capuchon (11) est sensiblement en forme de coupelle.

6. Couvercle d'élément de fixation (10) selon l'une quelconque des revendications précédentes, dans lequel la partie de capuchon (11) est arrimée de façon articulée à la partie de base (12) via un bras coudé (15) comprenant une ou plusieurs fentes (16), ouvertures (15b), ou régions à section ou épaisseur réduite formées dans celui-ci de façon à réduire le transfert thermique entre la partie de base (12) et la partie de capuchon (11).

7. Couvercle d'élément de fixation (10) selon l'une quelconque des revendications précédentes, dans lequel la partie de base (12), la partie d'articulation (14) et la partie de capuchon (11) sont formées d'un seul tenant.

8. Agencement de protecteur thermique pour un véhicule, comprenant un protecteur thermique (1), au moins un élément de fixation (2) destiné à arrimer le protecteur thermique (1) au véhicule, et au moins un couvercle d'élément de fixation (10) selon l'une quelconque des revendications précédentes.

9. Agencement de protecteur thermique pour un véhicule selon la revendication 8, dans lequel le couvercle d'élément de fixation (10) est préassemblé sur l'élément de fixation (2) avant ajustement de l'élément de fixation (2) sur le véhicule.

10. Agencement de protecteur thermique pour un véhicule selon la revendication 8 ou la revendication 9, dans lequel le couvercle d'élément de fixation (10) est serré en position par l'élément de fixation (2) en utilisation, à la fois lorsque le capuchon de couvercle d'élément de fixation (11) est dans sa position ouverte (21), et lorsque le capuchon de couvercle d'élément de fixation (11) est dans sa position fermée (41).

11. Composant de véhicule (3) doté d'un agencement de protecteur thermique selon l'une quelconque des revendications 8 à 10, dans lequel ledit couvercle d'élément de fixation (10) limite le rayonnement de chaleur à partir du composant (3) à travers l'élément de fixation (2).

12. Système d'échappement de véhicule comprenant un agencement de protecteur thermique, un composant de véhicule (3), ou un couvercle d'élément de fixation (10), selon l'une quelconque des revendications précédentes.

13. Véhicule comprenant un système d'échappement, un agencement de protecteur thermique, un composant (3), ou un couvercle d'élément de fixation (10), selon l'une quelconque des revendications précédentes.

14. Procédé d'arrimage d'un protecteur thermique (1) et d'un couvercle d'élément de fixation de protecteur thermique (10) à un composant de véhicule (3) ; le procédé comprenant:
l'insertion d'un élément de fixation (2) à travers un trou traversant correspondant dans une partie de base (12) dudit couvercle d'élément de fixation de protecteur thermique (10), puis à travers ledit protecteur thermique (1) ;
l'insertion dudit élément de fixation (2) dans un trou correspondant dans ledit composant (3) ;
l'arrimage dudit élément de fixation (2) audit composant de véhicule (3) ;
le positionnement d'un capuchon (11), monté de façon articulée sur ladite partie de base (12) dudit couvercle d'élément de fixation de protecteur thermique (10), pour couvrir une partie exposée dudit élément de fixation (2) ;
et :
l'arrimage dudit capuchon en place par enclenchement de moyens de verrouillage coopérant (12a, 11 a) intégrés dans ledit capuchon (11) et ladite partie de base (12).
